# EUROPÄISCHE PATENTSCHRIFT

(11) **EP 0 370 131 B1**
(45) Veröffentlichungstag und Bekanntmachung des Hinweises auf die Patenterteilung: **01.06.1994**
(21) Anmeldenummer: 88119594.5
(22) Anmeldetag: 24.11.1988
(51) Int. Cl.: F16K 31/42, F15B 20/00, B64C 13/40

(54) **Vorgesteuertes Dreiwegeventil**
Three way pilot operated valve
Vanne pilotée à trois voies

(43) Veröffentlichungstag der Anmeldung: 30.05.1990
(73) Patentinhaber: Feinmechanische Werke Mainz GmbH, D-55120 Mainz (DE)
(72) Erfinder: Wagner, Richard Dipl.-Ing., D-6500 Mainz-Ebersheim (DE)
(74) Vertreter: Meissner, Peter E., Dipl.-Ing.

(56) Entgegenhaltungen:
- DE-A- 1 750 758
- US-A- 2 825 362
- US-A- 2 878 832
- US-A- 3 347 259

## Beschreibung

Die Erfindung bezieht sich auf ein vorgesteuertes Dreiwegeventil nach dem Oberbegriff des Anspruchs 1.

Ein bekanntes Dreiwegeventil dieser Art (US-A-2 825 362) ist druckluftbetrieben und zur Steuerung von Kupplungen und Bremsen vorgesehen. Das nachfolgend beschriebene Problem tritt dabei nicht auf.

Flugsteuer-Hydrauliksysteme werden über Pumpen mit Hydraulikflüssigkeit versorgt, und es besteht die Möglichkeit, die Druckzuführung rasch mittels eines Dreiwegeventils abzusperren und die Druckzuführung erneut zuzuschalten. Das Hydrauliksystem versorgt einige Verbraucher, darunter hydraulische Servoantriebe für Flugzeugklappen, aber auch Hilfsfunktionen, wie z.B. den Frachttürantrieb. Während des Aufenthalts am Boden kann zur Überprüfung des Flugzeuges sowie zur Betätigung der Frachttür die Hydraulikversorgung durch eine elektrisch angetriebene Pumpe sichergestellt werden. Da in diesem Wartungszustand des Flugzeuges das Wartungspersonal über die Tragflächen laufen kann, muß vermieden werden, daß Flugklappen oder dergleichen Flugsteuereinrichtungen bewegt werden können, solange sich das Flugzeug in diesem Wartungszustand befindet.

Der Erfindung liegt die Aufgabe zugrunde, ein vorgesteuertes Dreiwegeventil zu schaffen, welches sich zum Einbau in Flugsteuerhydrauliksysteme eignet und auch ohne Zuführung von hydraulischem Druck sich in eine Schaltstellung bringen läßt, in welcher der Verbraucheranschluß gesperrt ist, und wobei in der anderen Schaltstellung der Verbraucheranschluß in Abhängigkeit vom zugeführten Druck geöffnet werden kann.

Die gestellte Aufgabe wird aufgrund der Merkmale gemäß Anspruch 1 gelöst.

Der Pilotdruckzufuhranschluß kann durch eine Drosselverbindung zu der Druckzufuhrkammer gebildet sein. Auf diese Weise läßt sich die Hauptstufe des Ventils mit einer gewissen zeitlichen Dehnung von beispielsweise 300 ms öffnen, so daß der Druckaufbau in dem geschalteten Hydrauliksystem mit der durch die Drossel bestimmten Geschwindigkeit erfolgt und Druckspitzen vermieden werden. Eine zweite Möglichkeit, die Bewegungsgeschwindigkeit der Hauptstufe zu steuern, ist, eine Drossel in der Verbindungsleitung der Vorsteuerstufe zum Ventilsteuerraum anzuordnen. Diese hat jedoch den Nachteil, daß neben der Geschwindigkeit des Öffnungsvorganges der Hauptstufe auch der Schließvorgang eine Verzögerung erfährt. Wenn das Hydrauliksystem über Pumpen versorgt wird, die von dem Triebwerk angetrieben werden, dann steigt der hydraulische Druck beim Anlauf der Triebwerke von dem Reservoirdruck langsam bis zum Systemdruck an. Das Dreiwegeventil kann aber so ausgelegt sein, daß es einen Hydrodruck, der unterhalb des zum Betrieb von Servoantrieben notwendigen liegt, an diese weitergibt. Zu diesem Zweck ist die Ventilfeder mit einer solchen Federkraft gewählt, daß erst bei der vorbestimmten Druckhöhe (die unterhalb der für den Betrieb eines Servoantriebs nötigen liegt) das Ventilglied vom ersten Ventilsitz abheben und auf den zweiten Ventilsitz gelangen kann.

Das neue Dreiwegeventil hat noch folgende konstruktive Einzelheiten:
Der Kolben zur Betätigung des Ventilgliedes ist an seiner dem Ventilsteuerraum abgewandten Seite mit der Druckzufuhrkammer verbunden. Die Querschnittsfläche des Kolbens ist größer als die Querschnittsfläche des Hauptventilgliedes, welches ebenfalls als Kolben wirksam ist. Die Ventilfeder kann beispielsweise in einem Ventilfederraum angeordnet angeordnet sein, die von einer gerätefesten Wand und dem Kolben zum Antrieb des Ventilgliedes begrenzt wird oder zwischen Gehäusedeckel und Ventilteller angeordnet sein. Die Druckzufuhrkammer und die Verbraucheranschlußkammer weisen jeweils einen Anschlußkanal mit großem Querschnitt und die Rücklaufkammer einen Anschlußkanal mit kleinem Querschnitt auf. Durch diese Maßnahmen läßt sich die Baugröße des neuen Ventils minimieren.

Ein Ausführungsbeispiel der Erfindung wird anhand der Zeichnung beschrieben. Dabei zeigt:
- Fig. 1: das Ventil in seiner ersten Stellung,
- Fig. 2: das Ventil in seiner zweiten Stellung,
- Fig. 3: das Ventil in der Stellung ohne Stromversorgung und Hydraulikdruck und
- Fig. 4: eine Ansicht auf einen Verbindungsflansch eines ausgeführten Ventils.

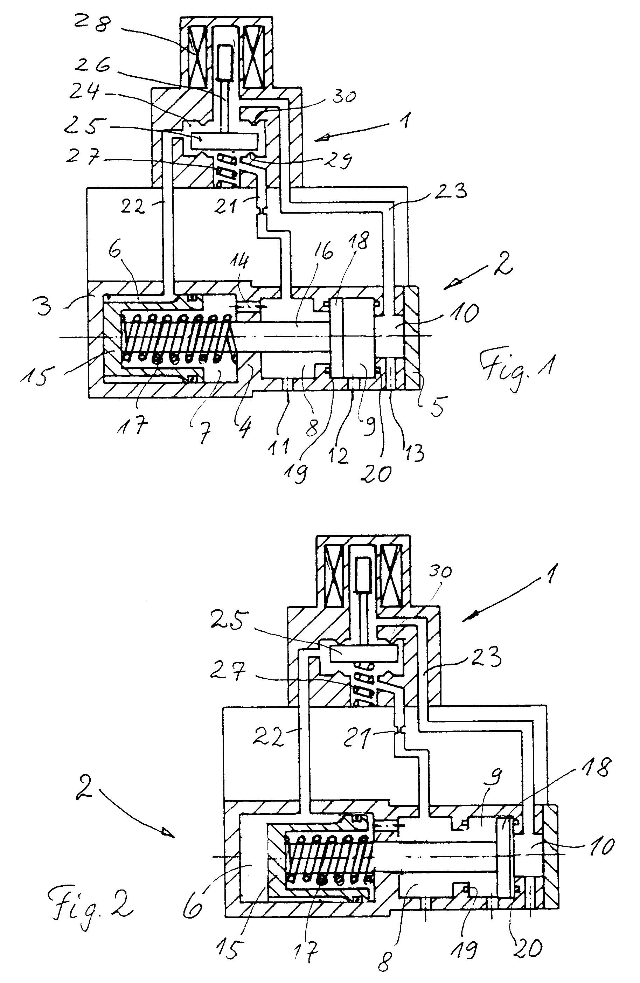

Fig. 1 bis 3 zeigen einen schematischen Längsschnitt durch das Ventil, so daß die wesentlichen Verbindungskanäle kurz und übersichtlich dargestellt sind. Es versteht sich aber, daß der Aufbau eines gebauten Ventils davon abweichen kann, insbesondere kann die Achse der Pilotstufe 1 zur Achse der Hauptstufe 2 parallel liegen.

Die Hauptstufe 2 weist ein schematisch angedeutetes Gehäuse 3 auf, dessen Innenraum durch eine Querwand 4 in zwei Hälften geteilt und durch Deckel 5 verschlossen ist. Im Gehäuseinneren ist ein Ventilsteuerraum 6, ein Federraum 7, eine Druckzuführkammer 8, eine Verbraucheranschlußkammer 9 und eine Rücklaufkammer 10 gebildet. Es sind drei äußere Anschlüsse vorgesehen, nämlich ein Druckzuführanschluß 11, ein Verbraucheranschluß 12 und ein Rücklaufanschluß 13. Die Druckzuführkammer 8 ist über einen internen Kanal 14 mit der Federkammer 7 verbunden. Die Kammern 6 und 7 sind durch einen Kolben 15 voneinander getrennt, der in dem von den Kammern 6 und 7 gebildeten Zylinderraum verschieblich ist. An dem Kolben 15 ist eine Kolbenstange 16 angebracht, die von einer Ventilfeder 17 umgeben wird und an ihrem vorderen Ende einen Ventilteller 18 trägt. Dieser arbeitet mit Ventilsitzen 19 und 20 zusammen, die an radialen Wänden der Verbraucheranschlußkammer 9 angebracht sind und beispielsweise aus Ringdichtungen bestehen können, die in entsprechende Gehäusenuten eingelegt sind.

Der Kolben 15, die Kolbenstange 16 und der Ventilteller 18 bilden ein bewegliches Hauptventilglied, welches durch die Ventilfeder 17 in die erste Ventilstellung (Fig. 1) gedrängt wird, in welcher der Ventilteller 18 die Druckzuführkammer 8 von der Verbraucheranschlußkammer 9 absperrt, jedoch freie Kommunikation zwischen der Verbraucheranschlußkammer 9 und der Rücklaufkammer 10 ermöglicht. In der zweiten Ventilstellung (Fig. 2) dichtet der Ventilteller 18 am Ventilsitz 20 ab, so daß die Rücklaufkammer 10 gegenüber der Verbraucheranschlußkammer 9 abgesperrt ist und eine freie Kommunikation zwischen der Druckzuführkammer 8 und der Verbraucherkammer 9 existiert. Die zweite Ventilstellung wird durch hydraulischen Druck herbeigeführt, wobei es auf die Stellung der Pilotstufe 1 ankommt.

Die Pilotstufe 1 weist einen Pilotdruckzuführanschluß 21 auf, der über einen Drosselkanal zur Druckzuführkammer 8 gebildet wird. Als weitere Verbindungskanäle zwischen der Hauptstufe und der Pilotstufe sind noch ein Steuerkanal 22 und ein Rücklaufverbindungskanal 23 vorgesehen. Auch der Steuerkanal 22 kann als Drosselkanal ausgebildet sein. Diese Kanäle 21, 22, 23 münden in einen Pilotsteuerraum 24, der durch einen Ventilteller 25 unterteilt wird, so daß jeweils einer der Anschlüsse 21 oder 23 abgesperrt und der andere Anschluß mit dem Steuerkanal 22 verbunden ist. Die Verschiebung des Ventiltellers 25 erfolgt über eine Stange 26 bzw. eine Feder 27. Die Stange 26 weist z.B. einen Eisenkern auf, der mittels eines Elektromagneten 28 in die in Fig. 1 dargestellte eingeschaltete Stellung gedrückt werden kann. Dies kann aber auch durch andere elektromechanische Umsetzer erfolgen. Bei ausgeschaltetem Strom 28 wird die in Fig. 2 dargestellte Stellung erreicht. In der eingeschalteten Stellung kommt der Ventilteller 25 auf einen Pilotventilsitz 29 und in der ausgeschalteten Stellung an einem Pilotventilsitz 30 zur Auflage. Die Anlage am Sitz 29 sperrt den Pilotdruckzufuhranschluß 21, so daß der Steuerkanal 22 mit dem Rücklaufkanal 23 verbunden ist, und bei Anlage des Ventiltellers 25 am Pilotsitz 30 wird der Rücklaufkanal 23 gesperrt, so daß der Pilotdruck über den Steuerkanal 22 in den Ventilsteuerraum 6 geführt wird.

Im dargestellten Ausführungsbeispiel wird der Pilotdruck aus der Druckzuführkammer 8 gewonnen und nimmt nach einer Übergangszeit von etwa 300 ms den gleichen Wert wie der Hauptdruck an. Unter der Annahme, daß die Querschnittsfläche des Kolbens 15 der Querschnittsfläche des Ventiltellers 18 entspricht, heben sich die internen Druckkräfte in den Kammern 7 und 8 auf, und es verbleiben die hydraulischen Druckkräfte auf der linken Seite des Kolbens 15 und auf der rechten Seite des Ventiltellers 18 sowie die Kraft der Feder 17. Der hydraulische Druck im Rücklaufanschluß ist gering, so daß im wesentlichen der hydraulische Druck im Ventilraum 6 die Stellung des Ventilgliedes 15, 16, 18 bestimmt, wie dies auch in Fig. 2 dargestellt ist. Die Kraft der Feder 17 wird so abgestimmt, daß erst bei einer vorbestimmten Druckhöhe in der Druckzuführkammer 8 die Verschiebung in die zweite Ventilstellung erfolgt, wobei diese vorbestimmte Druckhöhe der unterhalb der Druckhöhe zum Betrieb von hydraulischen Verbrauchern entspricht.

Hinsichtlich der Querschnittsfläche des Ventiltellers 18 ist man relativ frei, sich den jeweiligen Erfordernissen anzupassen, was den geschalteten Hydraulikstrom angeht. Jedoch ist die Querschnittsfläche des Ventiltellers 18 kleiner zu gestalten als die Querschnittsfläche des Kolbens 15, um das Ventil durch Verbinden der Kammer 6 über die Vorsteuerstufe mit Rücklauf in seine erste Stellung zurückzuschalten.

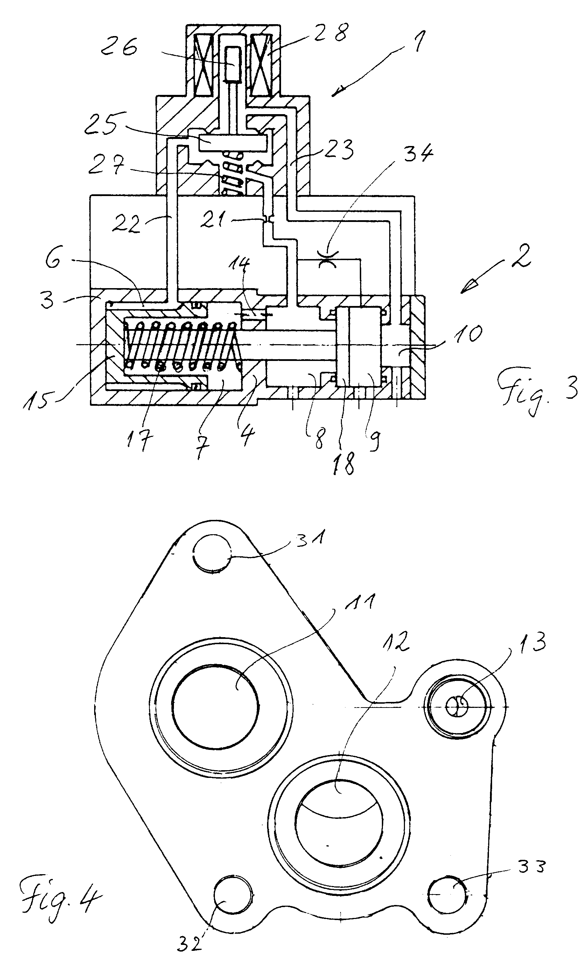

Bei dem vorgesehenen Anwendungszweck werden größere Hydraulikströme nur zwischen Druckzuführung und Verbraucher geschaltet, weswegen die Anschlüsse 11 und 12 dementsprechend dimensioniert werden, wie aus Fig. 4 ersichtlich. Für den Rücklaufanschluß 13 genügt ein relativ kleiner Querschnitt. Wie ersichtlich, sind die Anschlüsse 11, 12 und 13 jeweils über Verbindungshülsen mit eingesetzten Radialdichtungen mit einem entsprechenden Anschlußgehäuse verbunden. Da hydraulischer Druck im wesentlichen nur in den Anschlüssen 11 und 12 existiert, sind die Flanschbohrungen 31, 32, 33 dementsprechend um diese beiden Druckanschlußöffnungen 11 und 12 herumgruppiert.

Fig. 3 zeigt den drucklosen und stromlosen Zustand des Ventils. Außerdem ist eine Drosselleitung 34 zwischen der Verbraucheranschlußkammer 9 und der Druckzuführkammer 8 vorgesehen, welche einen genau definierten Bypass in der ersten Stellung sicherstellt, um eine Entleerung von Druckspeichern zu ermöglichen. Der Drosselkanal 34 ergibt lediglich in der ersten Stellung eine genau festgelegte Leckage, er kann jedoch auch weggelassen werden.

Wenn das Dreiwegeventil mit einem Flugsteuer-Hydrauliksystem verbunden ist, welches durch Pumpen gespeist wird, die unmittelbar von dem Triebwerk angetrieben werden, dann ist der von den Pumpen erzeugte Druck zunächst niedrig und wird vom Verbraucheranschluß 12 ferngehalten. Wenn eine Druckhöhe erreicht ist, die unterhalb der notwendigen liegt, um Servoantriebe oder dergleichen in dem Flugzeug zu betreiben, dann wird das Hauptventilglied aus der in Fig. 3 dargestellten in die in Fig. 2 dargestellte Ventilstellung verschoben. Der Pumpendruck steigt so weit an, bis der Systemdruck erreicht ist. Wenn dieser Systemdruck von dem oder den Verbrauchern weggenommen werden soll, wird der elektromechanische Wandler der Pilotstufe 1 eingeschaltet und die Druckzuführung zum Ventilsteuerraum 6 unterbrochen. Da eine ungehinderte Verbindung zwischen der Steuerleitung 22 und dem Rücklaufkanal 23 beschaltet ist, nimmt der Druck in der Steuerkammer 6 augenblicklich ab, und das Ventil geht innerhalb sehr kurzer Zeit in die Schaltstellung 1 (Fig. 1) zurück. Die in Fig. 1 gezeigte Stellung wird auch dann angenommen, wenn beispielsweise Frachtüren angetrieben werden und gleichzeitig die Flugsteuerung abgeschaltet wird. Unabhängig davon, wie hoch der hydraulische Druck im Druckzuführanschluß ist, durch Fehlen des Druckes im Steuerraum 6 wird infolge der Kraft der Feder 17 sichergestellt, daß das Ventil den Verbraucheranschluß 12 mit Rücklauf verbindet, so daß unbeabsichtigte Bewegungen beispielsweise der Flügelklappen und dergleichen verhindert werden.

## Patentansprüche

1. Vorgesteuertes Dreiwegeventil, insbesondere für Flugsteuer-Hydrauliksysteme, mit folgenden Merkmalen:
eine Hauptstufe (2) weist
eine Druckzuführkammer (8) mit einem Druckzuführanschluß (11),
eine Verbraucheranschlußkammer (9) mit einem Verbraucheranschluß (12) und
eine Rücklaufkammer (10) mit einem Rücklaufanschluß (13) auf;
zwischen Druckzuführkammer (8) und Verbraucheranschlußkammer (9) ist
ein erster Ventilsitz (19)
und zwischen Verbraucheranschlußkammer (9) und Rücklaufkammer (10)
ein zweiter Ventilsitz (20) zur Zusammenarbeit mit einem beweglichen Hauptventilglied (15, 16, 18) angeordnet;
das Hauptventilglied (15, 16, 18) ist in eine erste Ventilstellung zum Absperren der Druckzuführkammer (8) gegenüber der Verbraucheranschlußkammer (9) und in eine zweite Ventilstellung zum Verbinden der Druckzuführkammer (8) mit der Verbraucheranschlußkammer (9) antreibbar und weist hierzu einen Kolben (15)
und eine Ventilfeder (17) auf;
der Kolben (15) ist in einem Ventilsteuerraum (6) geführt, der über einen Steuerkanal (22) mit einer Pilotstufe (1) verbunden ist;
die Pilotstufe (1) weist einen Pilotdruckzuführungsanschluß (21) auf;
ein elektromechanischer Wandler, der ein Pilotventilglied (25, 26) betätigt, ist zwischen einer eingeschalteten und einer ausgeschalteten Stellung bewegbar;
gekennzeichnet durch folgende Merkmale:
das Ventil ist für hydraulische Flüssigkeit ausgelegt und weist einen Pilotventil-Rücklaufanschluß (23) auf;
in der ausgeschalteten Stellung der Pilotstufe (1) ist der Ventilsteuerraum (6) mit dem Pilotdruckzuführanschluß (21) und damit, durch den Hydraulikdruck auf den Kolben (15), der Verbraucheranschluß (12) mit dem Druckzuführanschluß (11) verbindbar, wenn die vom zugeführten Druck auf den Kolben (15) ausgeübte Kraft die Kraft der Ventilfeder (17) übersteigt.

2. Dreiwegeventil nach Anspruch 1, dadurch gekennzeichnet, daß der Pilotdruckzufuhranschluß (21) durch eine Drosselverbindung zu der Druckzufuhrkammer (8) gebildet wird oder daß der Steuerkanal (22) eine Drossel aufweist.

3. Dreiwegeventil nach Anspruch 1 oder 2, dadurch gekennzeichnet, daß die Ventilfeder (17) mit einer solchen Federkraft gewählt ist, daß erst bei einer vorbestimmten Druckhöhe in der Druckzufuhrkammer (8) das Hauptventilglied (15, 16, 18) vom ersten Ventilsitz (19) abheben und auf den zweiten Ventilsitz (20) gelangen kann.

4. Dreiwegeventil nach einem der Ansprüche 1 bis 3, dadurch gekennzeichnet, daß der Kolben (15) an seiner dem Ventilsteuerraum (6) abgewandten Seite mit der Druckzufuhrkammer (8) verbunden ist.

5. Dreiwegeventil nach einem der Ansprüche 1 bis 4, dadurch gekennzeichnet, daß die Querschnittsfläche des Kolbens (15) größer als die Querschnittsfläche eines Ventiltellers (18) des Hauptventilgliedes (15, 16, 18) ist.

6. Dreiwegeventil nach einem der Ansprüche 1 bis 5, dadurch gekennzeichnet, daß die Ventilfeder (17) in einem Ventilfederraum (7) angeordnet ist, die von einer gerätefesten Wand (4) und dem Kolben (15) begrenzt wird oder daß die Feder zwischen Gehäusedeckel und Ventilteller angeordnet ist.

7. Dreiwegeventil nach einem der Ansprüche 1 bis 6, dadurch gekennzeichnet, daß die Druckzufuhrkammer (8) und die Verbraucheranschlußkammer (9) jeweils einen Anschlußkanal (11, 12) mit großer Querschnittsfläche und die Rücklaufkammer (10) einen Anschlußkanal (13) mit kleiner Querschnittsfläche aufweisen.

## Claims

1. Piloted three-way valve, for flight-control hydraulics systems in particular, having the following characteristics:
a mains stage (2) has
a pressure feed chamber (8) with a pressure feed connection (11), a consumption connection chamber (9) with a consumption connection (12) and
a return chamber (10) with a return connection (13);
a first valve seat (19) is disposed between the pressure feed chamber (8) and the consumption connection chamber (9) and a second valve seat (20), which functions together with a movable main valve component (15, 16, 18), is disposed between the consumption connection chamber (9) and the return chamber (10);
the main valve component (15, 16, 18) can be actuated into a first valve position, to shut off the pressure feed chamber (8) in relation to the the consumption connection chamber (9), and into a second valve position, to connect the the pressure feed chamber (8) with the consumption connection chamber (9), and in addition has a piston (15),
and a valve spring (17);
the piston (15) is directed into a valve control space (6) which is connected with the pilot stage (1) by means of a control pipe (22);
the pilot stage (1) has a pilot pressure feed connection (21);
an electromagnetic transformer, which operates a pilot valve element (25, 26), can move between a position in which it is switched on and a position in which it is switched off;
characterized by the following characteristics:
the valve is implemented for a hydraulic fluid and has a pilot-valve return-connection (23);
in the setting in which the pilot stage (1) is off, the valve control space (6) can be connected with the pilot pressure feed connection (21) and therefore the consumption connection (12) can be connected with the pressure feed connection (11), by means of the hydraulic pressure on the piston (15), if the force exerted by the supplied pressure on the piston (15) exceeds the force of the valve spring (17).

2. Three-way valve in accordance with claim 1, wherein the pilot pressure feed connection (21) is formed by a throttle connection to the pressure feed chamber (8) or the control pipe (22) has a throttle.

3. Three-way valve in accordance with claim 1 or 2, wherein the spring tension of the valve spring (17) is selected such that the main valve component (15, 16, 18) only lifts from the first valve seat (19) and can only reach the second valve seat (20) when there is a predetermined level of pressure.

4. Three-way valve in accordance with any one of claims 1 to 3, wherein the piston (15), on its face which faces away from the valve control space (6), is connected with the pressure feed chamber (8).

5. Three-way valve in accordance with any one of claims 1 to 4, wherein the cross-sectional area of the piston (15) is greater than the cross-sectional area of a valve plate (18) of the main valve component (15, 16, 18).

6. Three-way valve in accordance with any one of claims 1 to 5, wherein the valve spring (17) is disposed in a valve spring space (7) which is bordered by the piston (15) and a wall (4) which is a solidly integrated part of the device, or the spring is disposed between the housing cover and the valve plate.

7. Three-way valve in accordance with any one of claims 1 to 6, wherein the pressure feed chamber (8) and the consumption connection chamber (9) each have a connection pipe (11, 12) with a large cross-sectional area and the return chamber (10) has a connection pipe (13) with a small cross-sectional area.

## Revendications

1. Vanne pilotée à trois voies, en particulier pour des systèmes hydrauliques de commande de vol, présentant les caractéristiques suivantes :
- un étage principal (2) comporte une chambre (8) d'alimentation en pression pourvue d'un raccord (11) d'alimentation en pression, une chambre (9) de raccordement à l'utilisateur pourvue d'un raccord (12) à l'utilisateur et une chambre de retour (10) pourvue d'un raccord de retour (13) ;
- un premier siège à vanne (19) est agencé entre la chambre (8) d'alimentation en pression et la chambre (9) de raccordement à l'utilisateur et un second siège à vanne (20) est agencé entre la chambre (9) de raccordement à l'utilisateur et la chambre de retour (10), pour la coopération avec un élément de vanne principal mobile (15,16,18) ;
- l'élément de vanne principal (15,16,18) peut être amené dans une première position de vanne pour fermer la chambre (8) d'alimentation en pression par rapport à la chambre (9) de raccordement à l'utilisateur, et dans une seconde position de vanne pour relier la chambre (8) d'alimentation en pression à la chambre (9) de raccordement à l'utilisateur, et il comporte à cet effet un piston (15) et un ressort de vanne (17) ;
- le piston (15) est guidé dans un espace (6) de commande de vanne, qui est relié par l'intermédiaire d'un canal de commande (22) à un étage pilote (1) ;
- l'étage pilote (1) comporte un raccord pilote (21) d'alimentation en pression ;
- un transducteur électromécanique qui actionne un élément de vanne pilote (25,26) peut se déplacer entre une position en circuit et une position hors circuit ; caractérisée par les caractéristiques suivantes :
- la vanne est réalisée pour un liquide hydraulique et comporte un raccord de retour (23) pour la vanne pilote ;
- la vanne est réalisée pour un liquide hydraulique et comporte un raccord de retour (23) pour la vanne pilote ;
- dans la position hors circuit de l'étage pilote (1), l'espace (6) de commande de vanne peut être relié au raccord pilote (21) d'alimentation en pression, et ainsi, par la pression hydraulique sur le piston (15), le raccord (12) à l'utilisateur peut être relié au raccord (11) d'alimentation en pression, lorsque la force exercée sur le piston (15) par la pression engendrée dépasse la force du ressort de vanne (17).

2. Vanne pilotée à trois voies selon la revendication 1,
caractérisée en ce que le raccord pilote (21) d'alimentation en pression est formé d'une liaison à étranglement vers la chambre (8) d'alimentation en pression ou en ce que le canal de commande (22) comporte un étranglement.

3. Vanne pilotée à trois voies selon l'une des revendications 1 ou 2,
caractérisée en ce que le ressort de vanne (17) est choisi avec une force de ressort telle que, seulement pour une pression prédéterminée dans la chambre (8) d'alimentation en pression, l'élément de vanne principal (15,16,18) peut être écarté du premier siège de vanne (19) et atteindre le second siège de vanne (20).

4. Vanne pilotée à trois voies selon l'une des revendications 1 à 3,
caractérisée en ce que le piston (15) est relié, par sa face opposée à l'espace (6) de commande de vanne, à la chambre (8) d'alimentation en pression.

5. Vanne pilotée à trois voies selon l'une des revendications 1 à 4,
caractérisée en ce que la surface de la section transversale du piston (15) est plus grande que la surface de la section transversale d'une tête de vanne (18) de l'élément de vanne principal (15,16,18).

6. Vanne pilotée à trois voies selon l'une des revendications 1 à 5,
caractérisée en ce que le ressort de vanne (17) est agencé dans un espace (7) de ressort de vanne qui est limité par une paroi (4) fixée au boitier et le piston (15) ou en ce que le ressort est agencé entre le couvercle du boitier et la tête de vanne.

7. Vanne pilotée à trois voies selon l'une des revendications 1 à 6,
caractérisée en ce que la chambre (8) d'alimentation en pression et la chambre (9) de raccordement à l'utilisateur comportent à chaque fois un canal de raccord (11,12) présentant une grande surface de section transversale, et la chambre de retour (10) comporte un canal de raccord (13) présentant une petite surface de section transversale.
